# FASCICULE DE BREVET EUROPEEN

(11) **EP 2 035 489 B1**
(45) Date de publication et mention de la délivrance du brevet: **16.03.2011**
(21) Numéro de dépôt: 07786928.7
(22) Date de dépôt: 29.06.2007
(51) Int. Cl.: C08J 3/03, D06M 15/643, C04B 41/49, B05D 5/08

(54) **EMULSION HUILE DANS EAU D'AMINOSILOXANES**
AMINOSILOXAN-ÖL-IN-WASSER-EMULSION
AMINOSILOXANE OIL-IN-WATER EMULSION

(30) Priorité: 30.06.2006 FR 0605938
(43) Date de publication de la demande: 18.03.2009
(73) Titulaire: Bluestar Silicones France SAS, 69003 Lyon Cedex 03 (FR)
(72) Inventeur: MARTIN, Nadia, F-69006 Lyon (FR); GIRAUD, Yves, F-69110 Sainte Foy Les Lyon (FR); DERUELLE, Martial, F-69440 Mornant (FR)
(86) Numéro de dépôt international: PCT/EP2007/056554
(87) Numéro de publication internationale: WO 2008/000814

(56) Documents cités:
- EP-A- 1 632 521
- EP-A2- 0 378 828
- EP-A2- 0 870 863
- DD-A5- 298 651
- FR-A2- 2 354 372
- US-A- 5 000 861

## Description

Le domaine de la présente invention est celui des émulsions silicones huile dans eau susceptibles d'être utilisées pour hydrofuger durablement un substrat en particulier un substrat textile.

Les compositions silicone liquides d'hydrofugation existent soit sous forme de solutions dans des solvants organiques tels que le "white spirit" ou l'heptane, soit sous forme d'émulsions aqueuses apparues plus récemment sur le marché. Classiquement, après l'imprégnation, la phase solvant organique ou la phase aqueuse de ces compositions se volatilise et la matière active silicone demeure sur ou dans la masse du substrat traité, de manière à former une barrière contre l'humidité.

Pour des raisons de coût, d'hygiène, de sécurité et de respect de l'environnement, on cherche à remplacer les compositions silicones liquides d'hydrofugation en phase solvant par des émulsions silicones aqueuses.

Par exemple dans le domaine du textile, l'hydrofugation consiste à empêcher l'eau de passer à travers un tissu, tout en conservant à ce tissu sa porosité à l'air. Pour l'hydrofugation des vêtements, une des caractéristiques recherchées est la permanence du traitement. On observe dans la pratique que les nombreuses formulations actuelles ne permettent pas d'atteindre des durabilités satisfaisantes.

Le caractère hydrofuge d'un support textile lui confère un effet déperlant (ou déperlance) et une bonne imperméabilité à l'eau.
- La déperlance est une caractéristique de la surface du textile. Elle correspond au fait que sous aspersion modérée (représentative d'une légère pluie) l'eau ne s'accroche pas sur le textile qui ressort de ce fait plus ou moins sec.
- L'imperméabilité à l'eau liquide est une caractéristique plutôt massique du textile en ce sens que l'eau ne doit pas envahir et traverser la porosité de la surface textile. Le nombre et la taille des pores sont à prendre en considération mais aussi le traitement de la surface de ces pores (surface des fibres tissées ou tricotées).

Apporter l'ensemble de ces fonctions à un matériau textile est déjà en soi une prouesse technique.

Parmi les principaux agents utilisés classiquement pour conférer un caractère hydrofuge à un support textile, on distingue :
- des acides carboxyliques contenant des sels d'aluminium et de zirconium, non permanents au lavage,
- des émulsions de paraffines, peu stables et non permanentes au lavage, à moins d'être combinées à des sels, et
- des mélamines modifiées qui confèrent à la fois un bon effet déperlant, une bonne imperméabilité et une bonne tenue au lavage.

Cependant, apporter des fonctions durables au matériau textile est une difficulté technique supplémentaire. Il est connu (cf. brevet DE-A- 2 822 393) que, pour améliorer l'ancrage, il est souhaitable de réaliser des liaisons chimiques covalentes entre le support et le composé que l'on cherche à déposer sur la surface textile. Néanmoins, étant donné la nature et la diversité des polymères utilisés pour fabriquer les matériaux textiles, cette option n'est pas toujours possible et, lorsqu'elle l'est, elle reste spécifique à un certain type de matériau textile support.

L'obtention de textiles présentant de manière durable les propriétés mentionnées *supra,* notamment une forte déperlance, peut s'avérer très intéressante pour le marché du textile. On insistera en outre sur le fait que pour ce type d'application, la persistance des propriétés dans des conditions d'abrasion humide et tout particulièrement au lavage est primordiale.

La demande de brevet US-A-2006/0041026 décrit l'utilisation d'une émulsion huile dans eau comprenant un polydiméthylsiloxane comprenant des groupes aminoalkyle, un émulsifiant à un taux inférieur à 5 parties en poids et un agent protonant qui est un acide et dont la présence est nécessaire afin de stabiliser l'émulsion même lorsqu'elle est diluée tel que cela est enseigné dans le brevet EP-556740 cité comme art antérieur dans cette référence.

Cependant la présence obligatoire d'acide dans ce type de formulation est préjudiciable au niveau d'une fabrication industrielle qui nécessite la manipulation et le stockage de composés présentant des risques pour l'environnement et la sécurité.

La demande de brevet FR-A2-2 354 372 décrit une émulsion aqueuse contenant un polyorganosiloxane contenant des groupements aminés, un tensioactif et un organosiloxane contenant au moins trois atomes d'hydrogène liés au silicium.

Un des objectifs essentiel de la présente invention est de fournir une composition qui permet d'apporter une hydrofugation durable à un grand nombre de substrats poreux ou non-poreux, absorbants ou non absorbant et en particulier à des matériaux textiles.

Un autre objectif est de fournir un procédé pour hydrofuger durablement un substrat poreux ou non-poreux, absorbant ou non absorbant et en particulier un substrat textile. Ce traitement permettant ainsi de conférer de manière durable au substrat traité, en particulier un substrat textile, une forte déperlance et ceci sans remettre en cause de manière substantielle les propriétés de respirabilité intrinsèques lorsque le matériau traité est un textile.

Ces objectifs, parmi d'autres, sont atteints par la présente invention qui concerne une composition, sous forme d'émulsion huile dans eau, à base de siloxane constituée essentiellement:
- d'au moins un aminopolyorganosiloxane (**A**),
- d'eau,
- d'au moins un tensioactif (**B**),
- éventuellement d'au moins une résine polyorganosiloxane (**C**) préparée par co-hydrolyse et co-condensation de chlorosilanes choisis dans le groupe constitué de ceux de formules (R⁹)₃SiCl, (R⁹)₂Si(Cl)₂, R⁹Si(Cl)₃ et Si(Cl)₄ où les radicaux R⁹ sont identiques ou différents et sont choisis parmi les radicaux : alkyles linéaires ou ramifiés en C₁ - C₆, alcényles en C₂ - C₄, phényl et trifluoro-3,3,3 propyle,
- éventuellement d'au moins un polyorganosiloxane époxyfonctionnalisé (**D**), et
- éventuellement d'au moins un additif (**E**) choisi parmi le groupe constitué par les biocides, les antifongiques, les agents anti-mousse, les agents antioxydant, les épaississants et les agents mouillants,
   avec comme conditions supplémentaires que :
   1) le tensioactif (**B**) est présent jusqu'à 2.5% en poids, de préférence jusqu'à 2% en poids, par rapport à la somme des poids des constituants (**A**), (**C**) et (**D**),
   2) les quantités de tensioactifs (**B**) et d'eau sont suffisantes pour l'obtention d'une émulsion huile-dans-eau, et
   3) ladite composition ne comprend pas d'agent protonant.

Pour atteindre cet objectif, parmi d'autres, les inventeurs ont eu le mérite de mettre à jour de manière tout à fait surprenante et inattendue, que pour hydrofuger durablement un substrat, en particulier un matériau textile, une émulsion huile dans eau selon l'invention permet de s'affranchir de l'addition d'un agent protonant tel que l'acide formique, l'acide acétique, l'acide sulfurique, l'acide chlorhydrique ou l'acide citrique. Ceci présente l'avantage d'éliminer tout risque environnemental ou sur le plan de la sécurité lié à l'utilisation ou au stockage d'acide dans une ligne de production industrielle.

Les inventeurs ont dû faire preuve d'un haut mérite inventif, puisqu'il leur a fallu aller à l'encontre du préjugé technique solidement ancré dans les moeurs, selon lequel l'addition d'un agent protonant est nécessaire au regard de la stabilisation des émulsions d'aminosilicones par conséquent au regard de leurs performances.

Dans le présent mémoire, l'expression « matériau textile » désigne : d'une part les fils, fibres et/ou filaments en matières synthétiques et/ou naturelles qui sont mis en oeuvre pour la fabrication d'articles textiles ; et d'autre part les articles textiles eux-mêmes comprenant au moins une surface textile et consistant par exemple dans des articles tissés, non tissés et/ou tricotés ; par extension, l'expression « matériau textile » désigne encore les matériaux dont la texture de base se présente sous forme fibrilaire telles que notamment le papier et le cuir.

La composition selon la présente invention peut être mise en oeuvre directement sur le substrat à traiter, en particulier les articles textiles comprenant au moins une surface textile et consistant par exemple dans des articles tissés, non tissés et/ou tricotés.

Par surface textile, on entend une surface obtenue par assemblage de fils, fibres et/ou filaments par un procédé quelconque tel que par exemple, le collage, le feutrage, le tissage, le tressage, le flocage, ou le tricotage.

Les fils, fibres et/ou filaments servant à la fabrication de ces articles textiles peuvent être issus de la transformation d'une matrice thermoplastique synthétique constituée d'au moins un polymère thermoplastique choisi dans le groupe constitué par : les polyamides, les polyoléfines, les chlorures de polyvinylidène, les polyesters, les polyuréthanes, les acrylonitriles, les copolymères (méth)acrylate-butadiène-styrène, leurs copolymères et mélanges. La matrice thermoplastique peut comprendre des additifs, tels que des pigments, délustrants, matifiants, catalyseurs, stabilisants chaleur et/ou lumière, agents anti-bactériens, anti-fongiques, et/ou anti-acariens. Il peut par exemple s'agir d'un agent matifiant, par exemple choisi parmi les particules de dioxyde de titane et/où de sulfure de zinc.

Les fils, fibres et/ou filaments peuvent encore être issus de matières naturelles tels que notamment le coton, le lin, la laine, suivant les procédés de transformation connus de l'homme de métier. Bien entendu, on peut utiliser des mélanges de matières synthétiques et naturelles.

La durabilité du traitement et des propriétés susmentionnées est primordiale. La durabilité peut être appréciée dans un contexte incluant le lavage du matériau textile. Des essais conduits par le demandeur dans des conditions de lavage drastiques ont permis de montrer la tenue remarquable du traitement avec la composition selon l'invention, corrélée à une persistance des propriétés. Cette durabilité peut être mesurée en comparant les performances du matériau textile traité, avant et après avoir fait subir à ce matériau un protocole de lavage intensif, le matériau étant essoré et séché avant de subir le ou les protocoles de test des propriétés.

L'effet perlant (propriété de déperlance) peut être mesuré par la méthode « Spray-Test » AATC Test Method 22-1996 ; cette méthode est décrite dans les exemples et peut consister en une évaluation visuelle de l'aspect mouillé de l'échantillon : le test consiste a asperger l'échantillon de l'article textile avec un volume d'eau donné ; l'aspect de l'échantillon est ensuite évalué visuellement et éventuellement comparé à un standard; une note est attribuée en fonction de la quantité d'eau retenue.

La mesure de la durabilité des propriétés de déperlance permet d'apprécier la durabilité du traitement silicone selon l'invention. Les autres propriétés apportées par la combinaison entre le textile, ces fils, fibres ou filaments constitutifs, et le traitement silicone profitent aussi de cette durabilité.

Selon un mode de réalisation préféré, l'aminopolyorganosiloxane **(A)** comprend des motifs siloxyles identiques ou différents de formule générale **(I)** :

**R¹ₐR²_{b}SiO_{4-(a+b)/2}** (I)

dans laquelle :
(a)
   a = 0, 1, 2 ou 3,
   b= 0,1, 2 ou 3,
   a+b ≤ 3,
(b) les symboles R¹ sont identiques ou différents et représentent chacun un radical hydrocarboné monovalent choisi parmi les radicaux alkyles linéaires ou ramifiés ayant de 1 à 40 atomes de carbone, les radicaux -OR³ avec R³= H ou un radical alkyle linéaire ou ramifié ayant de 1 à 40 atomes de carbone, et
(c) les symboles R² sont des radicaux identiques ou différents et représentent des radicaux de formule générale **(II)** :

   **-R⁴-N(R⁵)(R⁶)** **(II)**

   avec :
   - le symbole R⁴ étant un groupement divalent hydrocarboné ayant de 1 à 40 atomes de carbone,
   - le symbole R⁵ étant un atome d'hydrogène ou un groupement monovalent hydrocarboné ayant de 1 à 40 atomes de carbone,
   - le symbole R⁶ étant un atome d'hydrogène ou un radical de formule (III)

      -[R⁷-N(R⁸)]ₓR⁸
   - le symbole R7 étant un radical divalent de formule (IV)

      -[C(R⁸)(R⁸)-]_{y}
   - 0 ≤ x ≤ 40
   - y= 1, 2 ou 3,
   - le symbole R⁸ est un atome d'hydrogène ou un groupement monovalent hydrocarboné ayant de 1 à 40 atomes de carbone, et
(d) au moins un motif siloxyle porteur d'un groupement R² est présent par molécule.

Comme exemples de radicaux R² utiles selon l'invention ont peut citer les radicaux suivants :
- CH₂-NH₂
- CH₂-NH-C₆H₅
- CH₂-NH-C₆H₁₁
- CH₂-NH-(C₂H₄O)ᵢ[C₂H₃(CH₃)O]ₖH
- C₃H₆-NH₂
- c₃H₆-NH-C₆H₅
- C₃H₆-NH-C₆H₁₁
- c₃H₆-NH-(C₂H₄O)ⱼ[C₂H₃(CH₃)O]ₖH
- C₃H₆-NH-(C₂H₄-NH)ᵢ(C₂H₄O)ⱼ[C₂H₃(CH₃)O]ₖH
- C₃H₆-NH-C₂H₄-NH₂
- C₃H₆-NH-C₂H₄-NH-C₆H₅
- C₃H₆-NH-C₂H₄-NH-C₆H₁₁
- C₃H₆-NH-C₂H₄-NH-(C₂H₄O)ⱼ[C₂H₃(CH₃)O]ₖH
- C₃H₆-NH-C₃H₆-
- C₃H₆-O-C₅H₄(CH₃)₄NH
- CH₂CH(CH₃)CH₂-NH-C₂H₄-NH₂
- CH₂CH(CH₃)CH₂-NH-C₂H₄-NH-C₆H₅
- CH₂CH(CH₃)CH₂-NH-C₂H₄-NH-C₆H₁₁
- C₃Hₛ-NH-C₂H₄-NH-C₂H₄-NH₂
- C₁₈H₃₆-NH₂

Les indices i, j et k sont des entiers identiques ou différents compris entre 0 et 20, la somme i+j+k est de préférence compris entre 0 et 30.

Il est particulièrement avantageux que le radical R² décrit dans la formule (I) ci-dessus est choisi parmi le groupe constitué par :

-(CH₂)₃-N(R⁵)₂ ; -(CH₂)₃-N(R⁵)₂- et -(CH₂)₃-N(R⁵)-(CH₂)₂-N(R⁵)₂

avec le symbole R⁵ étant un atome d'hydrogène ou un groupement monovalent hydrocarboné ayant de 1 à 40 atomes de carbone.

Selon un autre mode de réalisation préféré, le radical R² est choisi parmi le groupe constitué par les radicaux suivants : -(CH₂)₃-NH₂ et -(CH₂)₃-NH-(CH₂)₂-NH₂.

La nature de tensioactif (B) sera facilement déterminée par l'homme du métier, l'objectif étant de préparer une émulsion stable. Les tensioactifs anioniques, cationiques, non-ioniques et zwitterioniques peuvent être employés seuls ou en mélange.

A titre de tensioactif anionique, on peut mentionner les agents tensio-actifs suivants:
- les alkylesters sulfonates de formule R^{a}-CH(SO₃M)-COOR^{b}, où R^{a} représente un radical alkyle en C₈-C₂₀, de préférence en C₁₀-C₁₆, R^{b} un radical alkyle en C₁-C₆, de préférence en C₁-C₃ et M un cation alcalin (sodium, potassium, lithium), ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine),
- les alkylsulfates de formule R^{c}OSO₃M, où R^{c} représente un radical alkyle ou hydroxyalkyle en C₁₀-C₂₄, de préférence en C₁₂- C₂₀, M représentant un atome d'hydrogène ou un cation de même définition que ci- dessus, ainsi que leurs dérivés éthoxylénés (OE) et/ou propoxylénés (OP), présentant de préférence de 1 à 20 motifs OE,
- les alkylamides sulfates de formule R^{d}CONHR^{e}OS0₃M où R^{d} représente un radical alkyle en C₂-C₂₂, de préférence en C₆-C₂₀, R^{e} un radical alkyle en C₂-C₃, M représentant un atome d'hydrogène ou un cation de même définition que ci-dessus, ainsi que leurs dérivés éthoxylénés (OE) et/ou propoxylénés (OP), présentant de préférence 1 à 20 motifs OE,
- les sels d'acides gras saturés ou insaturés en Cₛ-C₂₄, de préférence en C₁₄-C₂₀, les alkylbenzènesulfonates en C₉-C₂₀, ainsi que leurs dérivés éthoxylénés (OE) et/ou propoxylénés (OP), présentant de préférence 1 à 20 motifs OE, - les alkylbenzènesulfonates en C₉-C₂₀, les alkylsulfonates primaires ou secondaires en C₈-C₂₂, les alkylglycérol sulfonates, les acides polycarboxyliques sulfonés décrits dans GB-A-1 082 179, les sulfonates de paraffine, les N-acyl N-alkyltaurates, les mono- et dialkylphosphates, les alkyliséthionates, les alkylsuccinamates, les alkylsulfosuccinates, les monoesters ou diesters de sulfosuccinates, les N-acyl sarcosinates, les sulfates d'alkylglycosides, les polyéthoxycarboxylates, le cation étant un métal alcalin (sodium, potassium, lithium), un reste ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine).

A titre de tensioactifs non-ioniques on peut citer les éthers alkyliques ou aryliques de poly(oxyde d'alkylène), l'hexastéarate de sorbitan polyoxyéthyléné, l'oléate de sorbitan polyoxyéthyléné et les éthers de cétylstéaryle et de poly(oxyde d'éthylène). A titre d'éther arylique de poly(oxyde d'alkylène), on peut mentionner les alkylphénols polyoxyéthylénés. A titre d'éther alkylique de poly(oxyde d'alkylène), on peut mentionner l'éther isodécylique de polyéthylèneglycol et l'éther triméthylnonylique de polyéthylèneglycol contenant de 3 à 15 unités d'oxyde d'éthylène par molécule.

On peut aussi citer à titre d'exemple de tensioactif : les tensioactifs fluorés ioniques, non ioniques ou amphotère et leurs mélanges, par exemple :
- les perfluoroalkyles,
- les perfluorobétaïnes,
- les polyfluoroalcools éthoxylés,
- les polyfluoroalkyles d'ammonium,
- les agents tensioactifs dont la partie hydrophile contient un ou plusieurs motif(s) saccharide(s) porteur(s) de cinq à six atomes de carbone et dont la partie hydrophobe contient un motif de formule Rf(CH₂)ₙ-, dans laquelle n = 2 à 20 et Rf représente un motif perfluoroalkyle de formule CₘF₂ₘ₊₁, dans laquelle m = 1 à 10 ; et
- les polyélectrolytes présentant des groupements latéraux perfluoroalkyles gras.

Par agent tensioactif fluoré, on entend, comme cela est parfaitement connu en soi, un composé formé d'une partie perfluorocarbonée aliphatique, comprenant au moins trois atomes de carbone, et une partie hydrophile, ionique, non ionique ou amphotère. La partie perfluorocarbonée d'au moins trois atomes de carbone peut représenter, soit l'ensemble, soit une fraction seulement de la partie fluorocarbonée de la molécule. Concernant ce type de composé, on trouve dans la littérature un grand nombre de références. L'homme du métier pourra se reporter notamment aux références suivantes :
- FR-A-2 149 519, WO-A-94 21 233, US-A-3,194,767, l'ouvrage "Fluorinated Surfactants", Erik Kissa, Editeur Marcel Dekker Inc. Chapitre 4, notamment les Tableaux 4.1 et 4.4.

On peut citer, en particulier, les produits vendus par la société DU PONT sous la dénomination ZONYL^{®}, par exemple FSO, FSN-100, FS-300, FSD, ainsi que les tensioactifs fluorés de dénomination FORAFAC^{®} distribués par la société DU PONT et les produits vendus sous la dénomination FLUORAD^{®} par la Société 3M.

Parmi ces tensioactifs, on citera, en particulier, les composés perfluoroalkylés anioniques, cationiques, non-ioniques et amphotères, et parmi eux, plus particulièrement, les tensioactifs de la classe des ZONYL^{®} commercialisés par DU PONT, e.g. :
- F(CF₂CF₂)₃₋₈CH₂CH₂SCH₂CH₂COOLi (anionique),
- F(CF₂CF₂)₃₋₈CH₂CH₂O(CH₂CH₂O)_{y}H avec v étant un entier variable (non-ionique),
- F(CF₂CF₂)₃₋₈CH₂CH₂SCH₂CH₂N⁺(CH₃)₃CH₃SO₄- (amphotère), et
- F(CF₂CF₂)₃₋₈CH₂CH(OCOCH₃)CH₂N⁺-(CH₃)₂CH₂CH₂CO₂- (amphotère), commercialisés par DU PONT respectivement sous les dénominations ZONYL^{®} FSA, ZONYL^{®} FSO, ZONYL^{®} FSC et ZONYL^{®} FSK.

On peut encore préciser à leur propos :
- ZONYL^{®} FSO 100 : CAS 65545-80-4, (non-ionique) 99 à 100 %, le reste étant du 1,4-dioxane
- ZONYL^{®} FSN : CAS 65545-80-4, 99 à 100 %, le reste étant de l'acétate de sodium et du 1,4-dioxane
- ZONYL^{®} FS-300 : CAS 65545-80-4, 40 %, le reste étant de 1,4-dioxane (< 0,1 %) et de l'eau
- ZONYL^{®}FSD : CAS 70983-60-7 30 %, (cationique), le reste étant de l'hèxylèneglycol (10 %), du chlorure de sodium (3 %) et de l'eau (57 %).

On peut encore citer :
- les perfluoroalkyl bétaïnes (amphotères) telles que celle commercialisée par DU PONT sous la dénomination FORAFAC^{®} 1157, les polyfluoroalcools éthoxylés (non-ioniques), tels que celui commercialisé par DU PONT sous la dénomination FORAFAC 1110 D, les sels polyfluoroalkyl d'ammonium (cationiques), tels que celui commercialisé par DU PONT sous la dénomination FORAFAC 1179 ;
- les agents tensioactifs dont la partie hydrophile contient un ou plusieurs motif(s) saccharide(s) contenant de 5 à 6 atomes de carbone (motifs dérivés de sucres comme le fructose, le glucose, le mannose, le galactose, le talose, le gulose, l'allose, l'altose, l'idose, l'arabinose, le xylose, le lyxose et/ou le ribose) et dont la partie hydrophobe contient un motif de formule R_{F}(CH₂)ₙ, où n peut aller de 2 à 20, de préférence de 2 à 10 et R_{F} représente un motif perfluoroalkyle de formule CₘF₂ₘ₊₁ avec m pouvant aller de 1 à 10, de préférence de 4 à 8, choisis parmi ceux présentant les caractéristiques définies ci-dessus ; on peut mentionner les monoesters d'acides gras perfluoroalkylés et de sucres comme l'□,□-trehalose et le sucrose, la fonction monoester pouvant être représentée par la formule R_{F}(CH₂)ₙC(O), où n peut aller de 2 à 10 et R_{F} représente un motif perfluoroalkyle de formule CₘF₂ₘ₊₁ avec m pouvant aller de 4 à 8, décrits dans JAOCS, Vol. 69, no. 1 (janvier 1992) et choisis parmi ceux présentant les caractéristiques définies ci-dessus ; et
- les polyélectrolytes présentant des groupements latéraux perfluoroalkyles gras tels que les polyacrylates présentant des groupements R_{F}(CH₂)ₙ où n peut aller de 2 à 20, de préférence de 2 à 10 et R_{F} représente un motif perfluoroalkyle de formule CₘF₂ₘ₊₁ avec m pouvant aller de 1 à 10, de préférence de 4 à 8, choisis parmi ceux présentant les caractéristiques définies ci-dessus ; on peut mentionner les polyacrylates présentant des groupements -CH₂C₇F₁₅ décrits dans J. Chim. Phys. (1996) 93, 887-898 et choisis parmi ceux présentant les caractéristiques définies ci-dessus.

Les résines polyorganosiloxanes (**C**) utiles selon l'invention sont des résines organosiliciques préparées par co-hydrolyse et co-condensation de chlorosilanes choisis dans le groupe constitué de ceux de formules (R⁹)₃SiCl, (R⁹)₂Si(Cl)₂, R⁹Si(Cl)₃, Si(Cl)₄. Les radicaux R⁹ sont identiques ou différents et sont choisis parmi les radicaux alkyles linéaires ou ramifiés en C₁ - C₆, les radicaux alcényles en C₂ - C₄, phényle, trifluoro-3,3,3 propyle. On peut citer par exemple comme radicaux R⁹ alkyles, les radicaux méthyle, éthyle, isopropyle, tertiobutyle et n-hexyle. Ces résines sont des oligomères ou polymères organopolysiloxanes ramifiés bien connus et disponibles dans le commerce. Elles présentent, dans leur structure, au moins deux motifs siloxyles différents choisis parmi ceux de formule (R⁹)₃SiO_{1/2} (motif M), (R⁹)₂SiO_{2/2} (motif D), R⁹SiO_{3/2} (motif T) et SiO_{4/2} (motif Q), l'un au moins de ces motifs étant un motif T ou Q. Les radicaux R⁹ sont répartis de telle sorte que les résines comportent environ de 0,8 à 1,8 radicaux R⁹ par atome de silicium. De plus, ces résines ne sont pas complètement condensées et elles possèdent encore environ de 0,001 à 1,5 groupe OH et/ou alkoxyle par atome de silicium. Comme exemples d'oligomères ou de polymères organopolysiloxanes ramifiés on peut citer les résines MQ, les résines MDQ, les résines TD et les résines MDT, les groupes OH et/ou alkoxyle pouvant être portés par les motifs M, D et/ou T, la teneur pondérale en groupes OH et/ou alkoxyle étant comprise entre 0,2 et 10 % en poids.

De manière préférentielle, la résine polyorganosiloxanique (C) est une résine liquide polyorganosiloxane de type T(OH), DT(OH), DQ(OH), DT(OH), MQ(OH), MDT(OH) MDQ(OH) ou les mélanges de celles-ci .

Comme polyorganosiloxane époxyfonctionnalisé **(D)** utile selon l'invention on peut citer les polyorganosiloxanes comprenant au moins un radical **Y** époxy-fonctionnel, relié au silicium par l'intermédiaire d'un radical divalent contenant de 2 à 20 atomes de carbone et pouvant contenir au moins un hétéroatome de préférence l'oxygène, porteur d'au moins un motif époxy, Y étant de préférence sélectionné par les radicaux suivants :

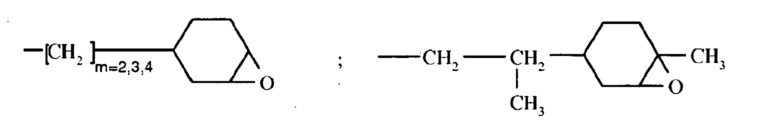

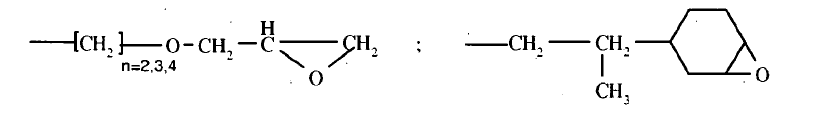

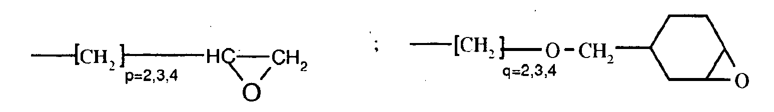

Selon un mode préféré de l'invention, le polyorganosiloxane époxyfonctionnalisé **(B)** est constitué de motifs de formule **(V)** et terminé par des motifs de formule **(VI)** et/ou constitué de motifs de formule **(V)** représentées ci-dessous : 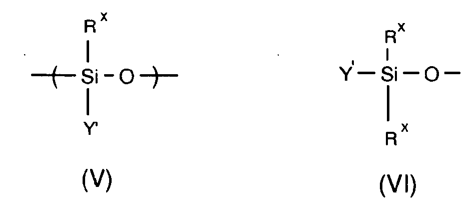 dans lesquelles :
- les symboles **R^{x}** sont semblables ou différents et représentent :
   - un radical alkyle linéaire ou ramifié contenant 1 à 8 atomes de carbone, les radicaux alkyles étant de préférence méthyle, éthyle, propyle, et octyle,
   - un radical cycloalkyle contenant entre 5 et 8 atomes de carbone cycliques, éventuellement substitué,
   - un radical aryle contenant entre 6 et 12 atomes de carbone pouvant être substitué, de préférence phényle ou dichlorophényle,
   - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles **Y'** sont semblables ou différents et représentent :
   - le groupement **R^{x}**, et/ou
   - un groupement époxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
   - avec l'un au moins des symboles Y' représentant un groupement époxyfonctionnel.

Selon un mode préféré de l'invention, les groupements organofonctionnels Y' du type époxy sont choisis parmi les formules suivantes :

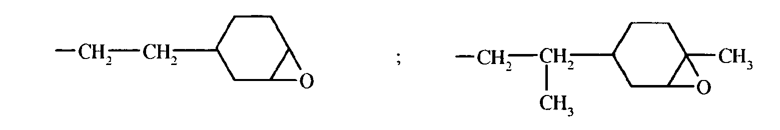

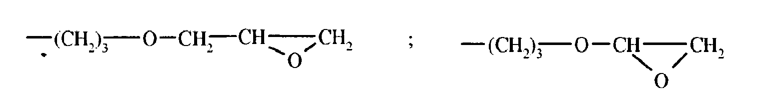

Le polyorganosiloxane époxyfonctionnalisé (**D**) peut être soit linéaire soit cyclique. Lorsqu'il s'agit de polyorganosiloxanes cycliques, ceux-ci sont constitués de motifs (**V**) qui peuvent être, par exemple, du type dialkylsiloxy ou alkylarylsiloxy. Ces polyorganosiloxanes cycliques présentent une viscosité de l'ordre de 1 à 5 000 mPa.s.

L'obtention de tels polyorganosiloxanes fonctionnalisés est parfaitement à la portée de l'homme du métier de la chimie des silicones.

Selon un autre mode de réalisation préféré la composition selon l'invention, sous forme d'émulsion huile dans eau, à base de siloxane est constituée essentiellement:
- de 100 parties en poids d'au moins un aminopolyorganosiloxane (**A**),
- d'eau,
- d'au plus 2.5 parties en poids d'au moins un tensioactif (**B**), et
- de 0 à 600 parties en poids d'au moins une résine polyorganosiloxane **(C)**,
- de 0 à 5 parties en poids d'au moins un additif **(E)** choisi parmi le groupe constitué par les biocides, les antifongiques, les agents anti-mousse, les agents antioxydant, les polymères filmogènes, les épaississants et les agents mouillants,
   avec comme conditions supplémentaires que :
   1) le tensioactif **(B)** est présent jusqu'à 2.5% en poids, de préférence jusqu'à 2% en poids, par rapport à la somme des poids des constituants **(A)** et **(C),** et
   2) les quantités de tensioactifs **(B)** et d'eau sont suffisantes pour l'obtention d'une émulsion huile-dans-eau.

Un autre objet de l'invention consiste en un procédé pour hydrofuger durablement un substrat, ledit substrat pouvant être poreux ou non-poreux, absorbant ou non absorbant caractérisé en ce que ledit substrat est mis en contact avec la composition sous forme d'émulsion huile dans eau selon l'invention telle que définie ci-dessus.

Comme exemple de substrat on peut citer les substrats suivants : textiles, pierres, bétons, mortiers, briques, tuiles et bois

Selon un mode de réalisation préféré le substrat est un matériau textile.

Selon un autre mode de réalisation, la composition selon l'invention est mise en oeuvre à une teneur de 5% en poids de polyorganosiloxanes lorsque le substrat est un matériau textile afin de ne pas dégrader ses propriétés au toucher.

Le dernier objet de l'invention consiste en l'utilisation d'une composition selon l'invention pour hydrofuger durablement un substrat poreux ou non-poreux, absorbant ou non absorbant tel que défini ci-dessus.

D'autres avantages et caractéristiques de la présente invention apparaîtront à la lecture des exemples suivants donnés à titre illustratif nullement limitatif.

### EXEMPLES

### 1) Méthodologie pour la préparation des émulsions

Les émulsions sont préparées comme suit :
Dans un réacteur IKA^{®}, une partie de l'eau et le tensioactif **(B)** sont mélangés,
   - Il est ajouté à ce mélange l'aminopolyorganosiloxane **(A)**, cette incorporation étant réalisée sous agitation de manière à obtenir une émulsion huile dans eau ; et
   - en fin d'introduction de l'aminopolyorganosiloxane et après homogénéisation, on procède à la dilution finale de l'émulsion et l'ajout des additifs (par exemple biocides).

### 2) Exemple 1 Comparatif:

Préparation d'une émulsion huile dans eau (suivant le protocole décrit au paragraphe 1) d'une huile silicone aminée **(A)** = Rhodorsil^{®} 21648 (vendue par la société Rhodia, viscosité moyenne comprise entre 1500 et 3500 mPa.S) + 7% en poids de tensioactif **(B)** par rapport à l'huile silicone aminée - Tensioactif **(B)** = Rhodasurf^{®®} ROX solution aqueuse à 85 % d'un alcool gras éthoxylé commercialisé par la société RHODIA.
Cette émulsion est diluée de manière à obtenir une émulsion à 5% en poids de silicones.

### 3) Exemple 2 Invention

Préparation d'une émulsion huile dans eau (suivant le protocole décrit au paragraphe 1) d'une huile silicone aminée **(A)** = Rhodorsil^{®} 21648 (vendue par la société Rhodia) + 2% tensioactif en poids par rapport à l'huile silicone aminée - Tensioactif **(B)** = Rhodasurf^{®®} ROX solution aqueuse à 85 % d'un alcool gras éthoxylé commercialisé par la société RHODIA.
Cette émulsion est diluée de manière à obtenir une émulsion à 5% en poids de silicones.

### 4) Exemple 3 : Invention :

Préparation d'une émulsion huile dans eau (suivant le protocole décrit au paragraphe 1) d'une huile silicone aminée **(A)** Rhodorsil 21643 (vendue par la société Rhodia, viscosité 300 mPa.S, taux d'azote d'environ 0,2% en poids par rapport au poids de l'huile) + 2% tensioactif en poids par rapport à l'huile silicone aminée - Tensioactif **(B)** = Rhodasurf^{®®} ROX solution aqueuse à 85 % d'un alcool gras éthoxylé commercialisé par la société RHODIA
Cette émulsion est diluée de manière à obtenir une émulsion à 5% en poids de silicones.

### 5) Support textile testé:

Tissu en polyamide 6.6 calandré sans traitement - 90 g/m².

### 6) Traitement d'un substrat textile:

On coupe dans la longueur un carré de tissu d'environ 1 mètre sur 1.5 mètre à l'aide de ciseaux. La pièce de tissu est pliée pour obtenir des carrés d'environ 20x20 cm, et les lignes de pliage sont coupées au cutter.

Puis Les échantillons de tissus (polyamide calandré sur une face) sont traités :
a) par application directe des solutions aqueuses d'hydrofugeant à 5% en extrait sec (émulsion diluée dix fois), de façon homogène sur la face non calandrée,
b) par spray :
   Le tissu est présenté face au spray à une vingtaine de centimètres de la buse du spray. On asperge le tissu en commençant par le coin supérieur. Une fois le tissu entièrement mouillé, on ajoute trois ou quatre coups de spray au centre du tissu et on pend immédiatement le tissu par un angle sur une grille de séchage durant 24 heures avant de le tester, ou
c) par trempage :
   Le tissu est plié et trempé entièrement dans le pot contenant l'hydrofugeant. Il est ensuite déplié et replié à l'inverse, de façon à ce que les faces à l'intérieures dans le précédent pliage se retrouve à l'extérieur. Puis on retrempe entièrement le tissu. On pend immédiatement le tissu par un angle sur une grille de séchage durant 24 heures avant de le tester.

Les hydrofugeants sont testés après un séchage de 36 heures puis éventuellement un passage d'une heure dans un sèche-linge à 60°C.

### 7) Lavage détergent (Entretien Textile) :

Une machine domestique PROLINE WMP-500C est utilisée pour testée les tissus traités selon le mode opératoire décrit au paragraphe 6). Le programme de lavage N°8 à 40°C (synthétique délicat - 40 minutes) est utilisé. Une dose de détergent de 4 g/L est employée (soit, pour une capacité de 8L, une dose d'environ 35 g par cycle). Le détergent utilisé est normalisé (ECE Non Phosphaté). Les échantillons sont donc soumis à une série de cycle de lavages en machine.

### 8) Evaluation de la Déperlance : Spray-Test suivant norme AATC Test Method 22-1996.

Les échantillons sont testés à température ambiante (23°C -RH 50%) après une phase de séchage après application et 4 heures après lavage. L'évaluation est pratiquée sur un ensemble de coupons textile de 20cmx20cm. Le tissu est incliné à 45° durant l'expérience pour laisser s'écouler l'eau. On tape deux fois le tissu encore pincé entre les anneaux sur le coin d'une table.

Puis, une note est attribuée selon les critères suivants :
5,0 = Aucune trace d'eau visible à l'oeil.
4,8 = De minuscules gouttelettes sont piégées entre les fibres du tissu.
4,5 = De petites gouttelettes (environ 5 à 10) sont reparties à la surface du tissu.
4,2 = De petites gouttelettes (environ 15 à 20) sont reparties à la surface du tissu.
4,0 = Des nombreuses gouttelettes sont visibles à la surface du tissu.
3,8 = Des gouttelettes à la surface du tissu et des traces infimes de diffusion d'eau dans le tissu sont visibles.
3,5 = Des gouttelettes à la surface du tissu et des traces de diffusion d'eau dans le tissu sont visibles.
3,0 = Des gouttes à la surface du tissu et les impactes des jets d'eau dans le tissu sont visibles. 2,5 = Des gouttes et une large diffusion discontinue d'eau dans le tissu sont visibles.
2,0 = Des gouttes et une diffusion quasi continue de l'eau dans le tissu sont visibles.
1,5 = Un léger film d'eau en surface et un film de diffusion continu dans le tissu (surface sous le jet) sont visibles.
1,0 = Un film d'eau continu en surface et dans le tissu sont visibles sous le jet. Une ou deux gouttelettes traversent le tissu quand on le tape.
0,5 = Un film d'eau continu en surface et une diffusion capillaire de l'eau dans tout le tissu sont visibles. Une ou deux gouttelettes traversent le tissu quand on le tape.
0,0 = Un film d'eau continu en surface et une diffusion capillaire de l'eau dans tout le tissu sont visibles. De grosses gouttes traversent le tissu quand on le tape.

### Résultats :

Les résultats de spray test en fonction du taux de tensioactif sont consignés dans le Tableau 1.

**Tableau 1**

| Référence | Spray test |
|---|---|
| Exemple 1 (comparatif) | 0.0 |
| Exemple 2 (invention) | 4.5 |

➢ A taux élevé (7%) de tensioactif par rapport à l'huile aminosilicone (comparatif), une absence de déperlance est observée après un premier traitement (à l'initial).
➢ A taux faible (2%) de tensioactif par rapport à l'huile aminosilicone (invention), la déperlance est obtenue dès le premier traitement (à l'initial).

**Tableau 2 : Résultats de spray test après une série de cycle de lavages en machine (durabilité).**

| Référence | Initial | Après 1 LAVAGE | Après 2 LAVAGES | Après 3 LAVAGES |
|---|---|---|---|---|
| Exemple 1 (comparatif) | **0.0** | 4.8 | 4.8 | **3.5** |
| Exemple 2 (invention) | **4.5** | 4.8 | 4.8 | **4.2** |
| Exemple 3 (invention) | **3.5** | 4.0 | 3.8 | **3.8** |

A faible taux de tensioactif (invention), on remarque que les propriétés de déperlance sont obtenues dès le premier traitement et sont durables alors qu'avec le comparatif il est nécessaire d'effectuer au moins un lavage au tissu afin de lui redonner des propriétés de déperlance acceptables.

## Revendications

1. Composition, sous forme d'émulsion huile dans eau, à base de siloxane constituée essentiellement:
- d'au moins un aminopolyorganosiloxane **(A)**,
- d'eau,
- d'au moins un tensioactif **(B)**,
- éventuellement d'au moins une résine polyorganosiloxane **(**C) préparée par co-hydrolyse et co-condensation de chlorosilanes choisis dans le groupe constitué de ceux de formules (R⁹)₃SiCl, (R⁹)₂Si(Cl)₂, R⁹Si(Cl)₃ et Si(Cl)₄ où les radicaux R⁹ sont identiques ou différents et sont choisis parmi les radicaux : alkyles linéaires ou ramifiés en C₁ - C₆, alcényles en C₂ - C₄, phényl et trifluoro-3,3,3 propyle,
- éventuellement d'au moins un polyorganosiloxane époxyfonctionnalisé **(D),** et
- éventuellement d'au moins un additif **(E)** choisi parmi le groupe constitué par les biocides, les antifongiques, les agents anti-mousse, les agents antioxydant, les épaississants et les agents mouillants,
avec comme conditions supplémentaires que :
1) le tensioactif **(B)** est présent jusqu'à 2.5% en poids, de préférence jusqu'à 2% en poids, par rapport à la somme des poids des constituants **(A)**, **(C)** et **(D),**
2) les quantités de tensioactifs **(B)** et d'eau sont suffisantes pour l'obtention d'une émulsion huile-dans-eau, et
3) ladite composition ne comprend pas d'agent protonant.

2. Composition selon la revendication 1, sous forme d'émulsion huile dans eau, à base de siloxane est constituée essentiellement:
- de 100 parties en poids d'au moins un aminopolyorganosiloxane **(A)**,
- d'eau,
- d'au plus 2.5 parties en poids d'au moins un tensioactif **(B)**,
- de 0 à 600 parties en poids d'au moins une résine polyorganosiloxane **(C)**, et
- de 0 à 5 parties en poids d'au moins un additif **(E)** choisi parmi le groupe constitué par les biocides, les antifongiques, les agents anti-mousse, les agents antioxydant, les épaississants et
les agents mouillants,
avec comme conditions supplémentaires que :
1) le tensioactif **(B)** est présent jusqu'à 2.5% en poids, de préférence jusqu'à 2% en poids, par rapport à la somme des poids des constituants **(A)** et **(C)**, et
2) les quantités de tensioactifs **(B)** et d'eau sont suffisantes pour l'obtention d'une émulsion huile-dans-eau.

3. Composition selon l'une quelconque des revendications précédentes dans laquelle l'aminopolyorganosiloxane **(A)** comprend des motifs siloxyles identiques ou différents de formule générale **(I)** :
**R¹ₐR²_{b}SiO_{4-(a+b)/2}** **(I)**
dans laquelle:
(a) a = 0, 1, 2 ou 3,
b = 0, 1, 2 ou 3,
a+b ≤ 3,
(b) les symboles R¹ sont identiques ou différents et représentent chacun un radical hydrocarboné monovalent choisi parmi les radicaux alkyles linéaires ou ramifiés ayant de 1 à 40 atomes de carbone, les radicaux -OR³ avec R³= H ou un radical alkyle linéaire ou ramifié ayant de 1 à 40 atomes de carbone, et
(c) les symboles R² sont des radicaux identiques ou différents et représentent des radicaux de formule générale **(II)** :
-R⁴-N(R⁵)(R⁶) **(II)**
avec :
- le symbole R⁴ étant un groupement divalent hydrocarboné ayant de 1 à 40 atomes de carbone,
- le symbole R⁵ étant un atome d'hydrogène ou un groupement monovalent hydrocarboné ayant de 1 à 40 atomes de carbone,
- le symbole R⁶ étant un atome d'hydrogène ou un radical de formule (III)
-[R⁷-N(R⁸)]ₓR⁸
- le symbole R7 étant un radical divalent de formule (IV)
[C(R⁸)(R⁸)-]_{y}
- 0 ≤ x ≤ 40
- y= 1, 2 ou 3,
- le symbole R⁸ est un atome d'hydrogène ou un groupement monovalent hydrocarboné ayant de 1 à 40 atomes de carbone, et
(d) au moins un motif siloxyles porteur d'un groupement R² est présent par molécule.

4. Composition selon la revendication 4 dans laquelle le radical R² est choisi parmi le groupe constitué par : -(CH₂)₃-N(R⁶)₂; -(CH₂)₃-N(R⁵)₂- et -(CH₂)₃-N(R⁵)-(CH₂)₂-N(R⁵)₂ avec le symbole R⁵ étant un atome d'hydrogène ou un groupement monovalent hydrocarboné ayant de 1 à 40 atomes de carbone.

5. Composition selon la revendication 1 ou 3 dans laquelle la résine polyorganosiloxane (C) est une résine silicone MQ.

6. Procédé pour hydrofuger durablement un substrat, ledit substrat pouvant être poreux ou non-poreux, absorbant ou non absorbant, **caractérisé en ce que** ledit substrat est mis en contact avec la composition sous forme d'émulsion huile dans eau telle que définie selon l'une quelconque des revendications 1 à 6.

7. Procédé selon la revendication 7 dans lequel le substrat est un matériau textile.

8. Utilisation d'une composition telle que définie selon l'une quelconque des revendications 1 à 5 pour hydrofuger durablement un substrat poreux ou non-poreux, absorbant ou non absorbant.

## Claims

1. A composition, in the form of an oil-in-water emulsion, based on siloxane, constituted essentially:
- of at least one aminopolyorganosiloxane (**A**),
- of water,
- of at least one surfactant (**B**),
- optionally, of at least one polyorganosiloxane resin (**C**) prepared by co-hydrolysis and co-condensation of chlorosilanes chosen from the group constituted of those of formulae (R⁹)₃SiCl, (R⁹)₂Si(Cl)₂, R⁹Si(Cl)₃ and Si(Cl)₄, where the R⁹ radicals are identical or different and are chosen from the radicals: linear or branched C₁-C₆ alkyls, C₂-C₄ alkenyls, phenyl and 3,3,3-trifluoropropyl,
- optionally, of at least one epoxy-functionalized polyorganosiloxane (**D**), and
- optionally, of at least one additive (**E**) chosen from the group constituted of biocides, antifungal agents, antifoams, antioxidants, thickeners and wetting agents,
with, as additional conditions, the fact that:
1) the surfactant (**B**) is present at up to 2.5% by weight, preferably up to 2% by weight, relative to the sum of the weights of the constituents (**A**), (**C**) and (**D**),
2) the amounts of surfactants (**B**) and of water are sufficient to obtain an oil-in-water emulsion, and
3) said composition does not comprise any protonating agent.

2. Composition according to Claim 1, in the form of an oil-in-water emulsion, based on siloxane, which is constituted essentially:
- of 100 parts by weight of at least one aminopolyorganosiloxane (**A**),
- of water,
- of at most 2.5 parts by weight of at least one surfactant (**B**), and
- of 0 to 600 parts by weight of at least one polyorganosiloxane resin (**C**),
- of 0 to 5 parts by weight of at least one additive (**E**) chosen from the group constituted of biocides, antifungal agents, antifoams, antioxidants, film-forming polymers, thickeners and wetting agents,
with, as additional conditions, the fact that:
1) the surfactant (**B**) is present at up to 2.5% by weight, preferably up to 2% by weight, relative to the sum of the weights of the constituents (**A**) and (**C**), and
2) the amounts of surfactants (**B**) and of water are sufficient to obtain an oil-in-water emulsion.

3. Composition according to either of the preceding claims, in which the aminopolyorganosiloxane (**A**) comprises siloxyl units, which may be identical or different, of general formula (I):
**R¹ₐ R^{a}_{b} SiO₄₋(_{a+b)/2}** **(I)**
in which:
(a) a = 0, 1, 2 or 3,
b = 0, 1, 2 or 3,
a+b ≤ 3,
(b) the symbols R¹ are identical or different and each represent a monovalent hydrocarbon-based radical chosen from linear or branched alkyl radicals containing from 1 to 40 carbon atoms, and -OR³ radicals with R³ = H or a linear or branched alkyl radical containing from 1 to 40 carbon atoms, and
(c) the symbols R² are radicals which are identical or different and represent radicals of general formula (II):
-R⁴-N(R⁵) (R⁶) (**II**)
with:
- the symbol R⁴ being a divalent hydrocarbon-based group containing from 1 to 40 carbon atoms,
- the symbol R⁵ being a hydrogen atom or a monovalent hydrocarbon-based group containing from 1 to 40 carbon atoms,
- the symbol R⁶ being a hydrogen atom or a radical of formula (III)
- [R⁷-N(R⁸)]ₓR⁸
- the symbol R⁷ being a divalent radical of formula (IV)
[C(R⁸)(R⁸)-]_{y}
- 0 ≤ × ≤ 40,
- y = 1, 2 or 3,
- the symbol R⁸ is a hydrogen atom or a monovalent hydrocarbon-based group containing from 1 to 40 carbon atoms, and
(d) at least one siloxyl unit bearing an R² group is present per molecule.

4. Composition according to Claim 3, in which the R² radical is chosen from the group constituted of: -(CH₂)₃-N(R⁵)₂; -(CH₂)₃-N(R⁵)₂- and -(CH₂)₃-N(R⁵)-(CH₂)₂-N(R⁵)₂ with the symbol R⁵ being a hydrogen atom or a monovalent hydrocarbon-based group containing from 1 to 40 carbon atoms.

5. Composition according to Claim 1 or 3, in which the polyorganosiloxane resin (C) is an MQ silicone resin.

6. Method for the long-lasting waterproofing of a substrate, it being possible for said substrate to be porous or nonporous, absorbent or nonabsorbent, **characterized in that** said substrate is brought into contact with the composition in the form of an oil-in-water emulsion as defined in any one of Claims 1 to 5.

7. Method according to Claim 6, in which the substrate is a textile material.

8. Use of a composition as defined in any one of Claims 1 to 5, for the long-lasting waterproofing of a porous or nonporous, absorbent or nonabsorbent substrate.

## Patentansprüche

1. Zusammensetzung in Form einer Öl-in-Wasser-Emulsion auf Siloxanbasis, im wesentlichen bestehend aus:
- mindestens einem Aminopolyorganosiloxan (**A**),
- Wasser,
- mindestens einem Tensid (**B**),
- gegebenenfalls mindestens einem Polyorganosiloxanharz (**C**), hergestellt durch Cohydrolyse und Cokondensation von Chlorsilanen aus der Gruppe bestehend aus denjenigen der Formeln (R⁹)₃SiCl, (R⁹)₂Si(Cl)₂, R⁹Si(Cl)₃ und Si(Cl)₄, wobei die Reste R⁹ gleich oder verschieden sind und unter linearen oder verzweigten C₁-C₆-Alkyl-, C₂-C₄-Alkenyl-, Phenyl- und Trifluor-3,3,3-propylresten ausgewählt sind,
- gegebenenfalls mindestens einem epoxyfunktionalisierten Polyorganosiloxan (**D**) und
- gegebenenfalls mindestens einem Additiv (**E**) aus der Gruppe bestehend aus Bioziden, Antimykotika, Antischaummitteln, Antioxidantien, Verdickern und Netzmitteln,
mit den zusätzlichen Bedingungen, daß:
1) das Tensid (**B**) in einer Menge von bis zu 2,5 Gew.-%, vorzugsweise bis zu 2 Gew.-%, bezogen auf die Summe der Gewichte der Bestandteile (**A**), (**C**) und (**D**), vorliegt,
2) die Mengen an Tensid (**B**) und Wasser so groß sind, daß sich eine Öl-in-Wasser-Emulsion ergibt, und
3) die Zusammensetzung kein Protonierungsmittel enthält.

2. Zusammensetzung nach Anspruch 1 in Form einer Öl-in-Wasser-Emulsion auf Siloxanbasis, im wesentlichen bestehend aus:
- 100 Gewichtsteilen mindestens eines Aminopolyorganosiloxans (**A**),
- Wasser,
- höchstens 2,5 Gewichtsteilen mindestens eines Tensids (**B**),
- 0 bis 600 Gewichtsteilen mindestens eines Polyorganosiloxanharzes (**C**) und
- 0 bis 5 Gewichtsteilen mindestens eines Additivs (**E**) aus der Gruppe bestehend aus Bioziden, Antimykotika, Antischaummitteln, Antioxidantien, Verdickern und Netzmitteln,
mit den zusätzlichen Bedingungen, daß:
1) das Tensid (**B**) in einer Menge von bis zu 2,5 Ges.-%, vorzugsweise bis zu 2 Ges.-%, bezogen auf die Summe der Gewichte der Bestandteile (**A**) und (**C**), vorliegt und
2) die Mengen an Tensid (**B**) und Wasser so groß sind, daß sich eine Öl-in-Wasser-Emulsion ergibt.

3. Zusammensetzung nach einem der vorhergehenden Ansprüche, worin das Aminopolyorganosiloxan (**A**) gleiche oder verschiedene Siloxyleinheiten der allgemeinen Formel (I):
**R¹ₐ R^{a}_{b} SiO₄-_{(a+b)/2}** (I)
worin:
(a) a = 0, 1, 2 oder 3,
b = 0, 1, 2 oder 3,
a+b ≤ 3,
(b) die Symbole R¹ gleich oder verschieden sind und jeweils für einen einwertigen Kohlenwasserstoffrest stehen, der unter linearen oder verzweigten Alkylresten mit 1 bis 40 Kohlenstoffatomen und Resten -OR³ mit R³ = H oder ein linearer oder verzweigter Alkylrest mit 1 bis 40 Kohlenstoffatomen ausgewählt ist, und
(c) die Symbole R² gleiche oder verschiedene Reste sind und für Reste der allgemeinen Formel (**II**):
-R⁴-N(R⁵)(R⁶) (**II**)
wobei:
- das Symbol R⁴ für eine zweiwertige Kohlenwasserstoffgruppe mit 1 bis 40 Kohlenstoffatomen steht,
- das Symbol R⁵ für ein Wasserstoffatom oder eine einwertige Kohlenwasserstoffgruppe mit 1 bis 40 Kohlenstoffatomen steht,
- das Symbol R⁶ für ein Wasserstoffatom oder einen Rest der Formel (III)
-[R⁷-N(R⁸)]ₓR⁸
steht,
- das Symbol R⁷ für einen zweiwertigen Rest der Formel (IV)
-[C(R⁸)(R⁸)-]_{y}
steht,
- 0 ≤ × ≤ 40,
- y = 1, 2 oder 3,
- das Symbol R⁸ für ein Wasserstoffatom oder eine einwertige Kohlenwasserstoffgruppe mit 1 bis 40 Kohlenstoffatomen steht,
stehen und
(d) pro Molekül mindestens eine Siloxyleinheit, die eine Gruppe R² trägt, vorliegt, umfaßt.

4. Zusammensetzung nach Anspruch 3, worin der Rest R² aus der Gruppe bestehend aus -(CH₂)₃-N(R⁵)₂; -(CH₂)₃-N(R⁵)₂- und -(CH₂)₃-N(R⁵)-(CH₂)₂-N(R⁵)₂ ausgewählt ist, wobei das Symbol R⁵ für ein Wasserstoffatom oder eine einwertige Kohlenwasserstoffgruppe mit 1 bis 40 Kohlenstoffatomen steht.

5. Zusammensetzung nach Anspruch 1 oder 3, worin es sich bei dem Polyorganosiloxanharz (**C**) um ein MQ-Silikonharz handelt.

6. Verfahren zur dauerhaften Hydrophobierung eines Substrats, wobei das Substrat porös oder nichtporös, absorbierend oder nichtabsorbierend sein kann, **dadurch gekennzeichnet, daß** man das Substrat mit der Zusammensetzung in Form einer Öl-in-Wasser-Emulsion gemäß einem der Ansprüche 1 bis 5 in Berührung bringt.

7. Verfahren nach Anspruch 6, bei dem es sich bei dem Substrat um ein Textilmaterial handelt.

8. Verwendung einer Zusammensetzung gemäß einem der Ansprüche 1 bis 5 zur dauerhaften Hydrophobierung eines porösen oder nichtporösen, absorbierenden oder nichtabsorbierenden Substrats.
